# EUROPEAN PATENT SPECIFICATION

(11) **EP 4 570 414 B1**
(45) Date of publication and mention of the grant of the patent: **07.10.2026**
(21) Application number: 23892755.2
(22) Date of filing: 19.12.2023
(51) Int. Cl.: B23K 26/21, B23K 26/70, B23K 26/14, B23K 101/36, B23K 26/03, B23K 26/046, B23K 26/082, B23K 31/12

(54) **BATTERY WELDING SYSTEM**
BATTERIESCHWEISSSYSTEM
SYSTÈME DE SOUDAGE DE BATTERIE

(30) Priority: 08.10.2023 CN 202311289834
(43) Date of publication of application: 18.06.2025
(73) Proprietor: Contemporary Amperex Technology (Hong Kong) Limited, Central, Central And Western District (HK)
(72) Inventor: WU, Kai, Ningde, Fujian 352100 (CN); LIU, Yuwen, Ningde, Fujian 352100 (CN); WU, Ying, Ningde, Fujian 352100 (CN); WANG, Wenchong, Ningde, Fujian 352100 (CN); JING, Zhiyong, Ningde, Fujian 352100 (CN)
(74) Representative: Holt, Lucy Rose
(86) International application number: PCT/CN2023/139921
(87) International publication number: WO 2025/077012

(56) References cited:
- CN-A- 114 985 931
- CN-A- 114 985 931
- CN-A- 117 020 415
- CN-U- 210 587 666
- CN-U- 210 981 162
- CN-U- 211 680 434
- CN-U- 215 658 430
- CN-U- 217 045 020
- DE-A1- 102020 212 933

## Description

The present invention relates to the technical field of welding, and in particular, to a battery welding system, see claim 1.

### Background Art

New energy batteries are increasingly applied in life and industries. For example, new energy vehicles equipped with batteries have a wide range of uses. In addition, the batteries are also increasingly applied in various fields such as energy storage.

In the production and manufacturing of the batteries, it is required to weld terminal posts of a plurality of battery cells and busbar components together so as to form a battery module.

Since different types of battery cells have different sizes, the corresponding busbar components also have different sizes. Therefore, after the type of battery produced in a battery production line is changed, a separation distance between the terminal posts of the plurality of battery cells also changes accordingly, and it is also required to change and adjust corresponding welding parameters accordingly, thus adversely affecting production efficiency.

CN215658430U discloses a welding device that comprises: a main body part; a welding component arranged on the main body part; a distance measuring component arranged on the main body part and located on one side of the welding part. The welding part and the distance measuring part are aligned at the same time.

CN114985931A (describing the preamble of claim 1) shows a power battery module welding equipment and a welding method thereof, wherein the welding equipment comprises a workbench, and a welding mechanism, a transfer mechanism and a pressing mechanism which are respectively arranged on the workbench.

CN217045020U discloses a battery module side seam laser welding device based on visual positioning, which comprises a frame, position control mechanism and welding set.

### Summary of the Invention

In view of this, it is desirable to provide a battery welding system, which can improve the compatibility of welding operations for different batteries.

In order to achieve the above object, a battery welding system according to the present invention is defined in claim 1, the
battery welding system for welding terminal posts of different battery cells in a battery by means of busbars including inter alia: a welding module including a welding apparatus, a driving assembly and a plurality of range finders, wherein the welding apparatus is configured to weld the busbars and the terminal posts, at least some of the range finders are drivingly connected to a driving end of the driving assembly, and the driving assembly drives the range finders to move in a first direction such that a separation distance between the range finders in the first direction changes, the first direction being a direction in which the battery cells connected by the busbars are arranged.

In the battery welding system in the embodiments of the present invention, the driving assembly driving the range finders to move enables the separation distance between the range finders in the first direction to change, so that the separation distance between the range finders in the first direction can correspond to a separation distance between regions to be welded on the battery in the first direction without disassembling the range finders. Accordingly, the efficiency of adjusting the separation distance between the range finders is improved, the time is saved, the workload is reduced, and it is conductive to improving production efficiency.

In some embodiments, the welding module includes a housing, a mounting cavity is provided in the housing, the welding apparatus is arranged in the mounting cavity, one side of the mounting cavity is open to form a clearance opening, and the welding apparatus is capable of passing through the clearance opening to perform welding. On the one hand, the housing provides a mounting position for the welding apparatus, and on the other hand, the housing can provide certain protection for the welding apparatus, reducing the probability of damage to welding apparatus caused by collision; and the clearance opening provides an operation channel for the welding apparatus to perform a welding operation by passing through the housing.

In some embodiments, the range finders are arranged on an outer surface of the housing and located at an edge of the clearance opening. In this way, it is conductive to allowing the range finders to as close as possible to the regions to be welded, thereby improving the measurement precision of the range finders. The range finders are located outside the housing, which facilitates debugging operations on the range finders and the driving assembly.

In some embodiments, the welding apparatus is a laser welding apparatus, the welding module includes a gas blowing assembly, the gas blowing assembly is provided with an air outlet for blowing out a gas flow, the gas blowing assembly is arranged on an emission side of a lens of the laser welding apparatus, and the air outlet faces a laser sweeping range of the laser welding apparatus, such that the gas flow blown out of the air outlet is located between the lens and regions to be welded of the battery. In this way, the gas flow blown out of the air outlet can form a gas curtain between the lens and the region to be welded and pass through the laser sweeping range of the laser welding apparatus, the laser light can pass through the gas curtain and continue welding, and spattered high-temperature foreign matter during welding can also be blown away by the gas flow, and is difficult to pass through the gas curtain and come into contact with the lens, thereby protecting the lens, and prolonging the service life of the lens.

In some embodiments, an air outlet direction of the air outlet is perpendicular to a lens optical axis of the laser welding apparatus. On the one hand, the probability of the gas flow being blown directly to the region to be welded is reduced, and the probability of foreign matter entering the region to be welded due to the blowing of the gas flow is reduced, improving the welding quality, and on the other hand, the probability of the gas flow being blown directly to the lens is reduced, and the probability of the spattered high-temperature foreign matter entrained by the gas flow being directly coming into contact with the lens is reduced, reducing the probability of damage to the lens.

In some embodiments, a plurality of gas blowing assemblies are provided, and the plurality of gas blowing assemblies are arranged in an extension direction of the lens optical axis of the laser welding apparatus. In this way, a plurality of gas curtains are formed between the lens and the region to be welded, so that the probability of the spattered high-temperature foreign matter during welding coming into contact with the lens is further reduced, protecting the lens.

In some embodiments, each range finder is a laser range finder, and a movement direction of the range finder is perpendicular to the lens optical axis of the laser welding apparatus. In this way, during movement of the range finder, a change in the distance of the range finder relative to the region to be welded in the extension direction of the lens optical axis is minimal, so that it is conductive to reducing a measurement error caused by a change in the position of the range finder, thereby improving the measurement precision.

In some embodiments, a direction in which the range finder emits a ranging laser beam is parallel to the lens optical axis of the laser welding apparatus, so that after the range finder completes the separation distance measurement on the region to be welded, the welding apparatus can perform welding after moving by a preset position compensation distance between the range finder and the lens of the laser welding apparatus in the direction perpendicular to the lens optical axis of the laser welding apparatus, which is conductive to reducing the amount of calculation required for distance compensation;
and/or, light emission regions of the range finders are aligned with each other. In this way, it is conductive to reducing a difference between the position compensation distances corresponding to different range finders, reducing the amount of calculation and improving a response speed.

In some embodiments, the welding module includes a first protective assembly, the first protective assembly includes a first barrier plate and a first driving member, and a driving end of the first driving member is drivingly connected to the first barrier plate, such that the first barrier plate selectively covers the light emission regions of the range finders. In this way, during welding by the welding apparatus, the first barrier plate can protect the light emission regions of the range finders, so that the probability of the spattered high-temperature foreign matter during welding being attached to the light emission regions of the range finders is reduced, reducing the probability of damage to the range finder.

According to the present invention, the driving assembly includes a driving electric motor, a lead screw, a guide rail and a slider, and wherein a driving end of the driving electric motor is drivingly connected to one end of the lead screw, the slider is in sliding fit with the guide rail, the guide rail extends in the same direction as the lead screw, and at least one of the range finders is arranged on the slider. In this way, the lead screw being driven to rotate by the driving electric motor, and the lead screw being in sliding fit with the slider enable the range finder located on the slider to move, realizing the purpose of changing the distance between the range finders.

In some embodiments, the battery welding system includes a robot, wherein an execution end of the robot is connected to the welding module. By using the robot, the welding module can flexibly move in a space at various trajectories and angles, which facilitates the welding module to avoid other surrounding objects during movement. Meanwhile, it is conductive to welding the region to be welded by the welding module at a suitable angle, thereby improving welding quality.

In some embodiments, the battery welding system further includes:
a conveying module for conveying the battery to be welded to a welding operation position; a positioning module for fixing the position of each battery cell and the position of each busbar after the battery reaches the welding operation position; and
a pressing plate module for abutting against the busbar after the position of the battery cell and the position of the busbar are fixed, such that the busbar is attached to the terminal posts.

In this way, by means of the cooperation of the conveying module, the positioning module, the pressing plate module and the welding module, the battery can be smoothly welded, and the welding quality can be improved.

### Brief Description of the Drawings

FIG. 1 is a schematic diagram of a battery welding device;
FIG. 2 is a schematic diagram, from a first perspective, of a welding module;
FIG. 3 is a schematic diagram of the welding module in FIG. 2 from a second perspective;
FIG. 4 is a schematic diagram of a gas blowing assembly;
FIG. 5 is a schematic diagram of a driving assembly;
FIG. 6 is a schematic diagram of battery cells and a busbar;
   and
FIG. 7 is a schematic flowchart of a method for controlling a battery welding device.

### List of reference signs:

Welding module 10; Welding apparatus 11; Laser sweeping range 11a; Lens optical axis 11b; Lens 111; Driving assembly 121; Driving electric motor 1211; Lead screw 1212; Guide rail 1213; Slider 1214; Range finder 122; Light emission region 1221; Housing 13; Mounting cavity 13a; Clearance opening 13b; Gas blowing assembly 14; Air outlet 14a; First protective assembly 15; First barrier plate 151; First driving member 152; Protective shell 16; Visual measurement assembly 17; Second protective assembly 18; Second barrier plate 181; Second driving member 182; Robot 20; Execution end 21; Battery cell 30; Region to be welded 30a; Terminal post 31; Busbar 40.

### Detailed Description of Embodiments

Unless otherwise defined, all technical and scientific terms used herein have the same meanings as those commonly understood by those skilled in the art to which the present disclosure belongs. The terms used herein are merely for the purpose of describing specific embodiments, but are not intended to limit the present invention. The terms "comprising/including" and "having" and any variations thereof in the specification of the present disclosure and in the brief description of the drawings described above are intended to cover non-exclusive inclusion.

In the description of the embodiments, the technical terms such as "first", "second", and "third" are merely used for distinguishing different objects, and shall not be construed as indicating or implying relative importance or implicitly indicating the number, particular order or primary-secondary relationship of the indicated technical features. In the description of the embodiments, the expression "a plurality of" means two or more, unless otherwise explicitly and specifically defined.

The phrase "embodiment" mentioned herein means that the specific features, structures, or characteristics described with reference to the embodiments can be encompassed in at least one embodiment of the present invention. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

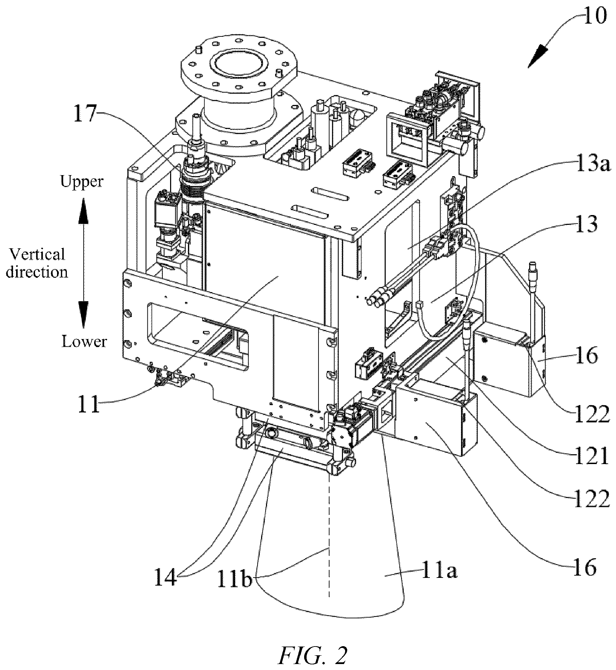

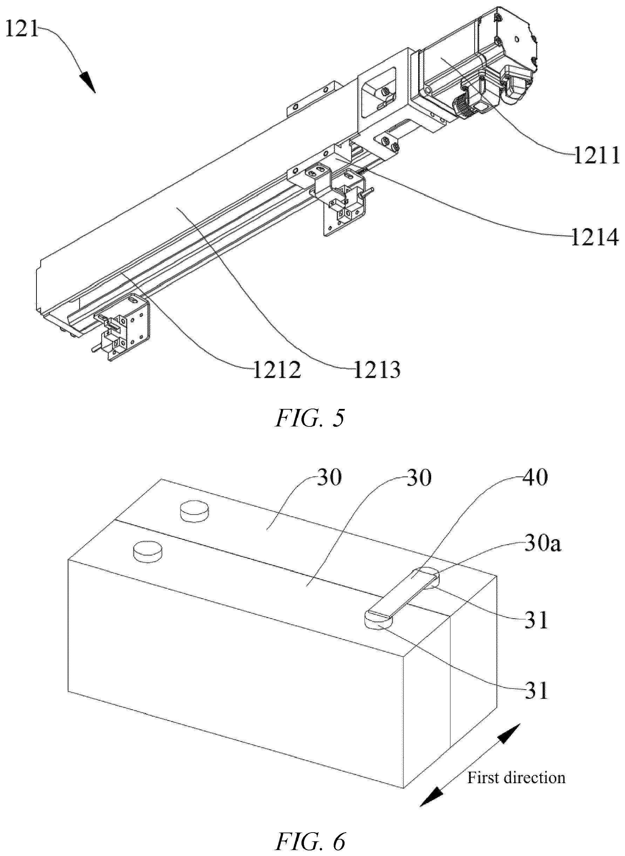

In the description of the embodiments, the orientation or positional relationship indicated by the technical terms "vertical direction", "upper" and "lower" is based on the orientation or positional relationship shown in FIG. 2, and the orientation or positional relationship indicated by the technical term "first direction" is based on the orientation or positional relationship shown in FIG. 6, which are merely intended to facilitate and simplify the description of the embodiments of the present disclosure, rather than indicating or implying that the device or element considered must have a particular orientation or be constructed and operated or used in a particular orientation, and therefore can not to be construed as limiting the embodiments of the present disclosure.

In the description of the embodiments, unless otherwise explicitly specified and defined, the technical terms such as "mounting", "connecting", "connection", and "fixing" should be construed in a broad sense, for example, they may be a fixed connection, a detachable connection, or integration; or may be a mechanical connection or an electric connection; or may be a direct connection or an indirect connection by means of an intermediate medium, or may be communication between interiors of two elements or interaction between the two elements. For those of ordinary skills in the art, the specific meanings of the above terms in the embodiments of the present disclosure may be construed according to specific circumstances.

In the description of the embodiments, unless otherwise explicitly specified and defined, the technical term "contact" should be construed in a broad sense, may be direct contact, contact by means of an intermediate intermediary layer, contact basically without an interaction force between two parties in contact, or contact with an interaction force between two parties in contact.

The embodiments of the present invention will be described in detail below.

Currently, batteries have been increasingly applied in life and industries. The batteries are not only used in energy storage power systems such as hydraulic power, thermal power, wind power and solar power stations, but also widely used in electric vehicles such as electric bicycles, electric motorcycles, electric vehicles, aerospace and other fields. With the continuous expansion of the application field of batteries, the market demand for the batteries is also expanding.

During production of the batteries, it is required to use a welding apparatus to weld terminal posts of two adjacent battery cells in a battery with a busbar component, so as to implement series and parallel electrical connections of the battery cells in the battery. Before welding, it is required to measure a separation distance between the welding apparatus and a region to be welded by means of a range finder, so as to obtain a reference standard for automatic welding. Since there are a plurality of battery cells in the battery, it is required to measure, by a plurality of range finders, separation distances between corresponding regions to be welded on the plurality of battery cells and the welding apparatus in sequence.

In different types of batteries, due to differences in the specifications and sizes of internal battery cells, there are different separation distances between the terminal posts of every two adjacent battery cells to be connected by the busbar components. Therefore, the busbar components electrically connecting the terminal posts of every two adjacent battery cells also have different sizes.

In the prior art, different types of batteries are switched for production in a production line, and due to a limited measurement coverage range of the range finders, it is required to manually disassemble and reassemble the plurality of range finders, in order to adapt to a change in a separation distance between terminal posts of two adjacent battery cells in a new type of battery and a change in the size of busbar components. In this way, the production costs are increased, and the production efficiency is adversely affected.

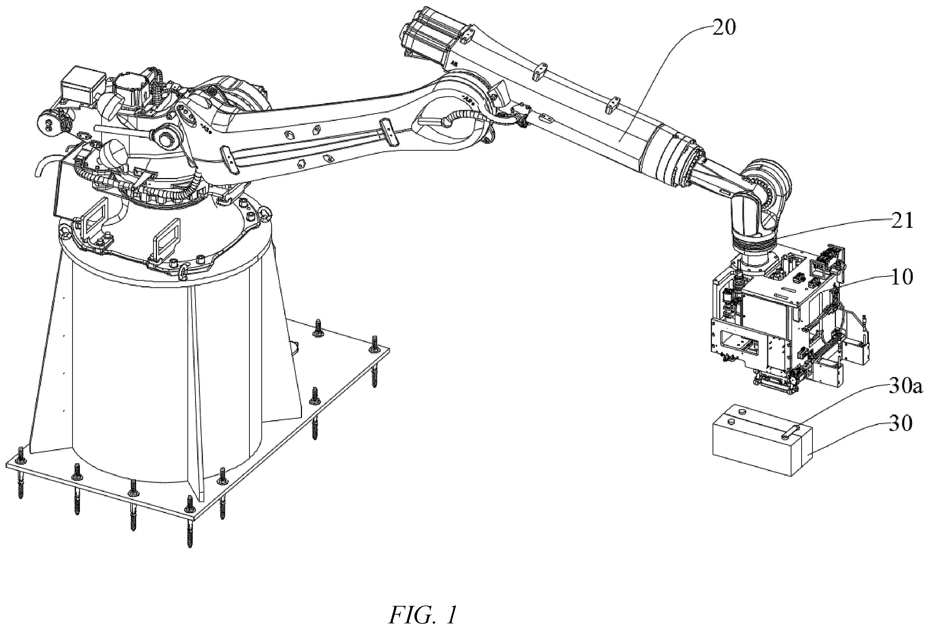

The embodiments of the present invention provide a battery welding system for welding terminal posts 31 of different battery cells 30 in a battery by means of busbars 40. Referring to FIGS. 1 to 3, the battery welding system includes a welding module 10. The welding module 10 includes a welding apparatus 11, a driving assembly 121 and a plurality of range finders 122. The welding apparatus 11 is configured to weld the busbars 40 and the terminal posts 31, at least some of the range finders 122 are drivingly connected to a driving end of the driving assembly 121, and the driving assembly 121 drives the range finders 122 to move in a first direction such that a separation distance between the range finders 122 in the first direction changes, with the first direction being a direction in which the battery cells 30 connected by the busbars 40 are arranged.

The welding apparatus 11 is configured to weld the busbars 40 and the terminal posts 31 so as to connect the busbars and the terminal posts together.

Each of the range finders 122 is configured to measure a distance between the range finder and a region to be welded 30a on each battery cell 30 in the battery, so as to provide a reference basis for determining a separation distance between the welding apparatus 11 and the region to be welded 30a.

The region to be welded 30a refers to a region on the battery that needs to be welded, for example, a region where the terminal post 31 of the battery cell 30 is in contact with the busbar 40.

It can be understood that a plurality of range finders 122 are provided, and each range finder 122 corresponds to one battery cell 30, such that each range finder 122 can separately obtain the separation distance between the range finder and the corresponding region to be welded 30a on the battery cell 30, and mutual interference between different range finders 122 is thus reduced.

The driving assembly 121 is configured to drive the at least some of the range finders 122 to change the positions thereof, so that the separation distance between different range finders 122 in the first direction changes accordingly to adapt to a separation distance between the regions to be welded 30a of the battery cells 30 in different types of batteries in the first direction.

Referring to FIG. 6, the first direction, i.e., the direction in which the battery cells 30 connected by the busbars 40 are arranged, refers to a direction in which two battery cells 30, in which two terminal posts 31 connected by the busbar 40 are respectively included, are arranged.

The separation distance between the range finders 122 in the first direction refers to a separation distance between central positions of regions for distance measurement of the range finders 122 in the first direction.

The separation distance between the regions to be welded 30a of the battery cells 30 refers to a separation distance between central positions of the regions to be welded 30a of the battery cells 30 in the first direction.

For example, if the separation distance between the regions to be welded 30a of the battery cells 30 in the battery currently required to be manufactured in the first direction is 20 mm (millimeters), the range finders 122 of the same number as the battery cells 30 in the battery currently required to be manufactured move such that the separation distance therebetween in the first direction is 20 mm.

The separation distance between the regions to be welded 30a of the battery cells 30 in the battery in the first direction may be obtained according to the design size of the battery itself. Different types of batteries have different design sizes. According to the type of battery currently required to be manufactured, the corresponding design size thereof is obtained, thereby obtaining the separation distance between the regions to be welded 30a of the battery cells 30 in the battery currently required to be manufactured in the first direction.

In the battery welding system in the embodiments of the present invention, the driving assembly 121 driving the range finders 122 to move enables the separation distance between the range finders 122 in the first direction to change, so that the separation distance between the range finders 122 in the first direction can correspond to the separation distance between the regions to be welded 30a on the battery in the first direction without disassembling the range finders 122. Accordingly, the efficiency of adjusting the separation distance between the range finders 122 is improved, the time is saved, the workload is reduced, and it is conductive to improving production efficiency.

It can be understood that the separation distance between the range finder 122 and the region to be welded 30a is measured by the range finder 122, and therefore, it is required to convert the measured separation distance value to obtain the separation distance between the welding apparatus 11 and the region to be welded 30a.

The battery may be used in, but not be limited to, a power consuming device such as an energy storage power system, a vehicle, a ship, or an aircraft.

The battery includes a plurality of battery cells 30, and each of the battery cells 30 may be a secondary battery. The secondary battery refers to a battery cell 30, of which active materials can be activated by means of charging for reuse after the battery cell 30 is discharged.

The battery cell 30 may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, etc., which is not limited in the embodiments of the present invention.

As an example, the battery cells 30 may be cylindrical battery cells, prismatic battery cells, pouch battery cells, or battery cells in other shapes, the prismatic battery cells include square-shelled battery cells, blade-shaped battery cells, and multi-prism battery cells, and the multi-prism battery cells are, for example, hexagonal prism batteries, etc., which are not limited in the embodiments of the present invention.

The battery welding system in some embodiments of the present invention will be described in detail below.

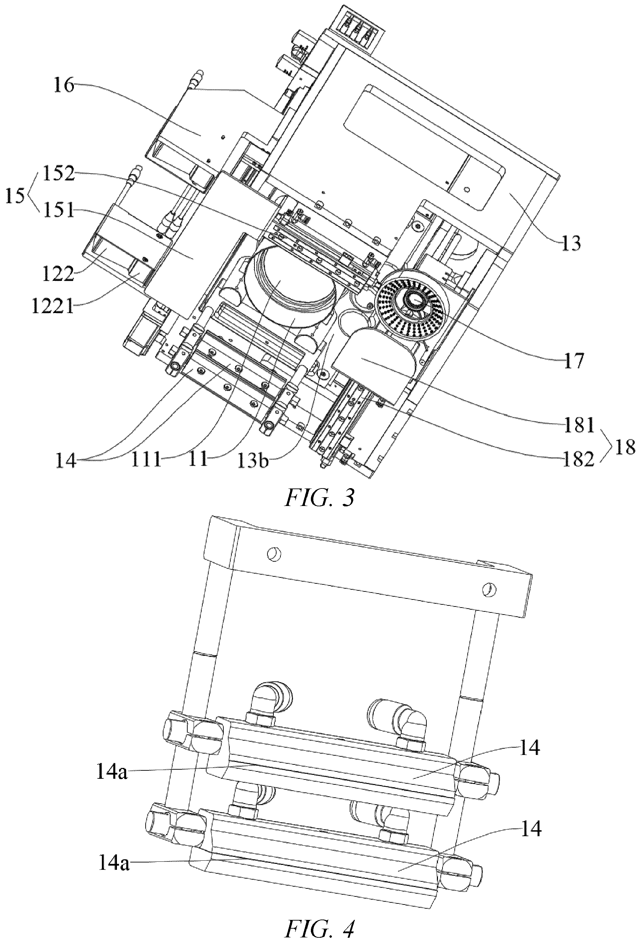

In some embodiments, referring to FIGS. 2 and 3, the welding module 10 includes a housing 13, a mounting cavity 13a is provided in the housing 13, the welding apparatus 11 is arranged in the mounting cavity 13a, one side of the mounting cavity 13a is open to form a clearance opening 13b, and the welding apparatus 11 is capable of passing through the clearance opening 13b to perform welding.

The welding apparatus 11 is arranged in the mounting cavity 13a, so that on the one hand, the housing 13 provides a mounting position for the welding apparatus 11, and on the other hand, the housing 13 can provide certain protection for the welding apparatus 11, reducing the probability of damage to the welding apparatus 11 caused by collision.

The clearance opening 13b provides an operation channel for the welding apparatus 11 to perform welding by passing through the housing 13. For example, in an embodiment where the welding apparatus 11 is a laser welding apparatus, laser light emitted by the laser welding apparatus passes through the clearance opening 13b and irradiates the region to be welded 30a.

The housing 13 is not limited in terms of specific structural form. For example, the housing 13 is formed by assembling a plurality of protective plates so as to enclose the mounting cavity 13a, and the welding apparatus 11 is fixed on at least one of the protective plates.

The protective plate is not limited in terms of specific material, and may be made of, for example, stainless steel, as long as the housing 13 has sufficient structural strength to bear the welding apparatus 11.

In some embodiments, referring to FIG. 2, the housing 13 is provided with a plurality of through observation holes, and the observation holes allow the mounting cavity 13a to be in communication with the outside of the housing 13. By means of the observation holes, on the one hand, it is easy to observe a state of the welding apparatus 11 in the mounting cavity 13a, to handle abnormalities of the welding apparatus 11 in a timely manner, and also to inspect and maintain the welding apparatus 11 via the observation holes, so that the possibility is reduced that the welding apparatus 11 needs to be mounted on or removed from the housing 13, and the workload is reduced, and on the other hand, the effect of reducing the weight can be achieved.

In some embodiments, referring to FIG. 2, the clearance opening 13b is located on a side of the housing 13 facing away from a connection between the housing 13 and a robot 20. In this way, it is conductive to increasing a swing amplitude of the clearance opening 13b and increasing a range which can be covered by the welding module 10 during welding.

It can be understood that the welding apparatus 11 is located near the clearance opening 13b, so that it is conductive to extending a welding range of the welding apparatus 11 and reducing the probability of occurrence of errors, energy loss or other problems caused by the distance between the welding apparatus 11 and the region to be welded 30a.

In some embodiments, referring to FIG. 2, the clearance opening 13b is located below the housing 13. During welding, the laser welding apparatus emits laser light to the region to be welded 30a from top to bottom in a vertical direction, so as to reduce the interference to the welding module 10 by other objects in the vicinity of the battery cells.

In some embodiments, referring to FIG. 2, the range finders 122 are arranged on an outer surface of the housing 13 and located at an edge of the clearance opening 13b. In this way, it is conductive to allowing the range finders 122 to be as close as possible to the regions to be welded 30a, thereby improving the measurement precision of the range finders 122. Meanwhile, the specific value of the separation distance between the welding apparatus 11 and the region to be welded 30a is obtained by calculating and converting the value of the separation distance between the range finder 122 and the region to be welded 30a, and the range finder 122 and the welding apparatus 11 are both close to the clearance opening 13b, so that it is conductive to decreasing a difference between the separation distance between the range finder 122 and the region to be welded 30a and the separation distance between the welding apparatus 11 and the region to be welded 30a, thereby improving the precision of the obtained separation distance between the welding apparatus 11 and the region to be welded 30a, and improving a welding effect. In addition, the range finders 122 are located outside the housing 13, which facilitates debugging operations on the range finders 122 and the driving assembly 121.

In some embodiments, referring to FIGS. 2 and 3, the welding module 10 includes a protective shell 16, and the protective shell 16 covers the range finder 122 so as to provide certain protection for the range finder 122.

The welding apparatus 11 is not limited in terms of specific type. The welding apparatus 11 is, for example, a laser welding apparatus.

The laser welding apparatus emits the laser light to irradiate the region to be welded 30a such that a material in the region to be welded 30a is melted for welding. The laser welding apparatus is provided with a laser generator and a galvanometer therein, the laser generator is configured to generate laser light by means of excitation, and the galvanometer is configured to reflect the laser light emitted by the laser generator, with an included angle between a reflective surface of the galvanometer and the laser light emitted by the laser generator. An emission angle of the laser light reflected by the galvanometer can be changed by controlling the swing of the galvanometer, so that the welding range is extended by means of the galvanometer with the laser generator being fixed.

It can be understood that during welding, due to problems such as impurities and nonuniform heating rate of the material of the region to be welded 30a, it is possible to generate an explosion point in the region to be welded 30a, thus causing spattering of high-temperature foreign matter.

In some embodiments, referring to FIGS. 2 to 4, the welding apparatus 11 is a laser welding apparatus, the welding module 10 includes a gas blowing assembly 14, the gas blowing assembly 14 is provided with an air outlet 14a for blowing out a gas flow, the gas blowing assembly 14 is arranged on an emission side of a lens 111 of the laser welding apparatus, and the air outlet 14a faces a laser sweeping range 11a of the laser welding apparatus, such that the gas flow blown out of the air outlet 14a is located between the lens 111 and the regions to be welded 30a of the battery.

The lens 111 of the laser welding apparatus refers to a lens 111 for the laser light reflected by the galvanometer to pass through, so that the laser light can be condensed in a smaller range by means of the convergence of the lens 111, increasing the heating rate of the region to be welded 30a, and improving the welding effect.

It can be understood that the lens 111 is a convex lens, such that the laser light emitted through the lens 111 can be converged.

The laser sweeping range 11a of the laser welding apparatus refers to a range which can be covered by the laser light after being emitted from the lens 111 by means of the swing of the galvanometer. It can be understood that the laser sweeping range 11a is tapered.

The gas blowing assembly 14 being located on the emission side of the lens 111, and the air outlet 14a facing the laser sweeping range 11a of the laser welding apparatus enable the gas flow blown out of the air outlet 14a to form a gas curtain between the lens 111 and the region to be welded 30a and to pass through the laser sweeping range 11a of the laser welding apparatus, the laser light can pass through the gas curtain and continue welding, and the spattered high-temperature foreign matter during welding can also be blown away by the gas flow, and is difficult to pass through the gas curtain and come into contact with the lens 111, thereby protecting the lens 111, and prolonging the service life of the lens 111.

In some embodiments, an air outlet direction of the air outlet 14a is perpendicular to a lens optical axis 11b of the laser welding apparatus.

The lens optical axis 11b refers to a virtual axis perpendicular to the center of a surface on a light emission side of the lens 111.

In this way, the gas flow can pass through the laser sweeping range 11a, so that while enabling the gas flow blown out of the air outlet 14a to form the gas curtain between the lens 111 and the region to be welded 30a, on the one hand, the probability of the gas flow being blown directly to the region to be welded 30a is reduced, and the probability of foreign matter entering the region to be welded 30a due to the blowing of the gas flow is reduced, improving the welding quality, and on the other hand, the probability of the gas flow being blown directly to the lens 111 is reduced, and the probability of the spattered high-temperature foreign matter entrained by the gas flow being directly coming into contact with the lens 111 is reduced, reducing the probability of damage to the lens 111.

In some embodiments, referring to FIGS. 2 and 4, a plurality of gas blowing assemblies 14 are provided, and the plurality of gas blowing assemblies 14 are arranged in an extension direction of the lens optical axis 11b of the laser welding apparatus. In this way, a plurality of gas curtains are formed between the lens 111 and the region to be welded 30a, so that the probability of the spattered high-temperature foreign matter during welding coming into contact with the lens 111 is further reduced, protecting the lens 111.

In some embodiments, referring to FIG. 3, the gas blowing assembly 14 is fixed on the welding apparatus 11, such that the gas blowing assembly 14 moves synchronously with the welding apparatus 11, and relative positions thereof and a distance therebetween are fixed, facilitating protection for the welding apparatus 11 at any position by the gas flow formed by the gas blowing assembly 14.

A source of the gas flow in the gas blowing assembly 14 is not limited, may be a main gas source of an external production line, or may be a gas pump included in the battery welding system, with a gas outlet of the gas pump being in communication with a gas path in the gas blowing assembly 14.

The gas flow blown out of the gas blowing assembly 14 is not limited in terms of specific type, and may be, for example, a helium gas, an argon gas or a nitrogen gas, etc.

It can be understood that the air outlet 14a may be selectively opened or closed such that an air outlet timing of the air outlet 14a can be flexibly selected.

In some embodiments, the gas blowing assembly 14 is provided with a gas cavity, the gas cavity is in communication with the air outlet 14a, and an inner wall of the gas cavity is tapered in a direction close to the air outlet 14a so as to increase a flow rate of the gas flow discharged from the air outlet 14a, improving blocking effect of the gas curtain formed by the gas flow on the spattered high-temperature foreign matter.

The range finder 122 is not limited in terms of specific type.

Illustratively, referring to FIGS. 2 and 3, each range finder 122 is a laser range finder, and a movement direction of the range finder 122 is perpendicular to the lens optical axis 11b of the laser welding apparatus.

Each laser range finder has a light emission region 1221 and a receiving region, wherein the light emission region 1221 is configured to emit the laser light to the region to be welded 30a that needs distance measurement, and the receiving region is configured to receive the laser light reflected from a target position.

A ranging laser beam is emitted to a target by the light emission region 1221 during operation, irradiates the region to be welded 30a and is reflected thereby, the reflected ranging laser beam is received by the receiving region, and a timer measures a time from emission to reception of the ranging laser beam, thereby calculating the distance between the laser range finder and the region to be welded 30a.

The movement direction of the range finder 122 is perpendicular to the lens optical axis 11b of the laser welding apparatus, that is to say, the movement direction of the range finder 122 is the same as the direction in which the battery cells 30 are arranged. In this way, during movement of the range finder 122, a change in the distance of the range finder relative to the region to be welded 30a in the extension direction of the lens optical axis 11b is minimal, so that it is conductive to reducing a measurement error caused by a change in the position of the range finder 122, thereby improving the measurement precision.

In some embodiments, a direction in which the range finder 122 emits the ranging laser beam is parallel to the lens optical axis 11b of the laser welding apparatus, so that after the range finder 122 completes the separation distance measurement on the region to be welded 30a, the welding apparatus 11 can perform welding after moving by a preset position compensation distance between the range finder 122 and the lens 111 of the laser welding apparatus in the direction perpendicular to the lens optical axis 11b of the laser welding apparatus, which is conductive to reducing the amount of calculation required for distance compensation.

In some embodiments, referring to FIG. 2, the light emission regions 1221 of the range finders 122 are aligned with each other, that is to say, separation distances between the light emission regions 1221 of the range finders 122 and the regions to be welded 30a differ less from each other. In this way, it is conductive to reducing a difference between the position compensation distances corresponding to different range finders 122, reducing the amount of calculation and improving a response speed.

It can be understood that during welding by the welding apparatus 11, there is no need to continue distance measurement by using the range finders 122.

In some embodiments, referring to FIG. 3, the welding module 10 includes a first protective assembly 15, the first protective assembly 15 includes a first barrier plate 151 and a first driving member 152, and a driving end of the first driving member 152 is drivingly connected to the first barrier plate 151, such that the first barrier plate 151 selectively covers the light emission regions 1221 of the range finders 122.

The first protective assembly 15 has a covering state in which the welding module 10 is located at a distance measurement position, and the range finders 122 can measure the separation distance between the range finders and the regions to be welded 30a, and an open state in which the first driving member 152 drives the first barrier plate 151 to move to a suitable position such that the first barrier plate 151 covers the light emission regions 1221.

In this way, during welding by the welding apparatus 11, the first barrier plate 151 can protect the light emission regions 1221 of the range finders 122, so that the probability of the spattered high-temperature foreign matter during welding being attached to the light emission regions 1221 of the range finders 122 is reduced, reducing the probability of damage to the range finder 122.

The first driving member 152 is not limited in terms of specific type, and may be, for example, a slide cylinder, etc.

In some embodiments, referring to FIG. 3, in the covering state, in the direction perpendicular to the ranging laser beam emitted by the range finder 122, projections of the range finders 122 are all located within a projection of the first barrier plate 151. In this way, only one first barrier plate 151 can be used to protect the range finders 122, so that a structure of the first protective assembly 15 is simplified, and the number of parts is reduced.

The driving assembly 121 is not limited in specific structure.

Illustratively, referring to FIG. 5, the driving assembly 121 includes a driving electric motor 1211, a lead screw 1212, a guide rail 1213 and a slider 1214. A driving end of the driving electric motor 1211 is drivingly connected to one end of the lead screw 1212, the slider 1214 is in sliding fit with the guide rail 1213, the guide rail 1213 extends in the same direction as the lead screw 1212, and at least one of the range finders 122 is arranged on the slider 1214. In this way, the lead screw 1212 being driven to rotate by the driving electric motor 1211, and the lead screw 1212 being in sliding fit with the slider 1214 enable the range finder 122 located on the slider 1214 to move, realizing the purpose of changing the distance between the range finders 122.

In some embodiments, referring to FIG. 2, the extension direction of the lead screw 1212 is perpendicular to the lens optical axis 11b of the laser welding apparatus, such that the movement direction of the range finder 122 is perpendicular to the lens optical axis 11b of the laser welding apparatus.

It can be understood that there are a plurality of battery cells 30 and a plurality of busbars 40 that need to be welded in the battery. Therefore, it is required to move the welding module 10 so as to adapt to different positions of the battery cells 30 and the busbars 40.

In some embodiments, referring to FIG. 1, the battery welding system includes a robot 20, wherein an execution end 21 of the robot 20 is drivingly connected to the welding module 10 so as to drive the welding module 10 to move to welding positions for welding the regions to be welded 30a.

The robot 20 is provided with a plurality of articulated shafts, each articulated shaft is correspondingly configured with a servo motor, and the servo motor directly drives the corresponding articulated shaft by means of a speed reducer, a synchronous pulley, etc., so that the last execution end 21 of the robot 20 has multiple degrees of freedom in a space.

The robot 20 is configured to drive the whole welding module 10 to move, such that the welding module 10 can reach a position where distance measurement is needed. Meanwhile, the whole welding module 10 can be driven away from a conveyor line for conveying batteries when the welding module 10 does not need to perform welding, and the probability of collision can be reduced; alternatively, during maintenance of the welding module 10, the welding module 10 is moved to a suitable position so as to facilitate an operation.

The robot 20 can flexibly move in a space at various trajectories and angles, which facilitates the welding module 10 to avoid other surrounding objects during movement. Meanwhile, it is conductive to welding the region to be welded 30a by the welding module 10 at a suitable angle, thereby improving welding quality.

In some embodiments, referring to FIGS. 1 and 2, the execution end 21 of the robot 20 is fixedly connected to the housing 13.

It can be understood that it is required to move the welding module 10 to a suitable distance measurement position by the robot 20 in advance, and then perform distance measurement by the range finder 122.

In some embodiments, referring to FIGS. 2 and 3, the welding module 10 includes a visual measurement assembly 17. The visual measurement assembly 17 is configured to capture an image of the region to be welded 30a so as to calculate a position of the welding module 10 relative to the region to be welded 30a.

The visual measurement assembly captures the image of the region to be welded 30a and sends acquired image data to a control device corresponding to the battery welding system. The control device calculates the image data and then obtain the position of the welding module 10 relative to the region to be welded 30a, so as to calculate the displacement and direction of movement required for the welding module 10.

The visual measurement assembly 17 is not limited in terms of specific type, and may be, for example, a Charge Coupled Device (CCD) camera, etc.

A capturing end of the visual measurement assembly 17 is located on the same side and at the same orientation as the lens 111.

In some embodiments, referring to FIG. 3, the welding module includes a second protective assembly 18, the second protective assembly 18 includes a second barrier plate 181 and a second driving member 182, and a driving end of the second driving member 182 is drivingly connected to the second barrier plate 181, such that the second barrier plate 181 selectively covers the light emission regions of the range finders. In this way, during welding by the welding apparatus 11, the second barrier plate can protect the capturing end of the visual measurement assembly 17, so that the probability of the spattered high-temperature foreign matter during welding being attached to the capturing end of the visual measurement assembly 17 is reduced, reducing the probability of damage to the visual measurement assembly 17.

In some embodiments, the battery welding system further includes:
a conveying module for conveying the battery to be welded to a welding operation position;
a positioning module for fixing the position of each battery cell 30 and the position of each busbar 40 after the battery reaches the welding operation position; and
a pressing plate module for abutting against the busbar 40 after the position of the battery cell 30 and the position of the busbar 40 are fixed, such that the busbar 40 is attached to the terminal posts 31.

The battery to be welded is placed on the conveying module. By means of the conveying module, the battery to be welded is moved to the welding operation position.

The welding operation position is a position of the battery when the welding module is welding the battery.

The conveying module is not limited in terms of specific type, and may be, for example, a transmission belt, an Automated Guided Vehicle (AGV), etc.

The positioning module fixes the position of each battery cell 30 and the position of each busbar 40 so as to reduce the probability of welding failure due to a change in the relative positions of the battery cell 30 and the busbar 40 in the subsequent welding process.

The pressing plate module abuts against the busbar 40 such that the busbar 40 is attached to the terminal posts 31, so that the probability of separation between the busbar 40 and the terminal posts 31 during welding is reduced, which is conductive to improving the welding quality.

In this way, by means of the cooperation of the conveying module, the positioning module, the pressing plate module and the welding module, the battery can be smoothly welded, and the welding quality can be improved.

Referring to FIGS. 1 to 5, the battery welding system according to an embodiment of the present invention will be described in detail as follows.

The battery welding system includes the robot 20, the welding module 10, the conveying module, the positioning module and the pressing plate module. The welding module 10 includes the housing 13, the laser welding apparatus, the gas blowing assembly 14, the range finders 122, the driving assembly 121 and the first protective assembly 15. The execution end 21 of the robot 20 is connected to the housing 13, the mounting cavity 13a is provided in the housing 13, and the laser welding apparatus is arranged in the mounting cavity 13a. The side of the mounting cavity 13a away from the execution end 21 is open to form the clearance opening 13b, and the range finders 122 are arranged on the outer surface of the housing 13 and located at the edge of the clearance opening 13b. The gas blowing assembly 14 is located on the emission side of the lens 111 of the laser welding apparatus, and the air outlet 14a faces the laser sweeping range 11a of the laser welding apparatus. The air outlet direction of the air outlet 14a is perpendicular to the lens optical axis 11b of the laser welding apparatus. The driving assembly 121 includes the driving electric motor 1211, the lead screw 1212, the guide rail 1213 and the slider 1214. The driving end of the driving electric motor 1211 is drivingly connected to one end of the lead screw 1212, the slider 1214 is in sliding fit with the guide rail 1213, the guide rail 1213 extends in the same direction as the lead screw 1212, and at least one of the range finders 122 is arranged on the slider 1214 such that the range finder 122 is driven to move. The movement direction of the range finder 122 is perpendicular to the lens optical axis 11b of the laser welding apparatus. Each range finder 122 is a laser range finder. The direction in which the range finder 122 emits the ranging laser beam is parallel to the lens optical axis 11b of the laser welding apparatus, and the light emission regions 1221 of the range finders 122 are aligned with each other. The first protective assembly 15 includes the first barrier plate 151 and the first driving member 152, and the driving end of the first driving member 152 is drivingly connected to the first barrier plate 151, such that the first barrier plate 151 selectively covers the light emission regions 1221 of the range finders 122. The conveying module is configured to convey the battery to be welded to the welding operation position; the positioning module is configured to fix the position of each battery cell 30 and the position of each busbar 40 after the battery reaches the welding operation position; and the pressing plate module is configured to abut against the busbar 40 after the position of the battery cell 30 and the position of the busbar 40 are fixed, such that the busbar 40 is attached to the terminal posts 31.

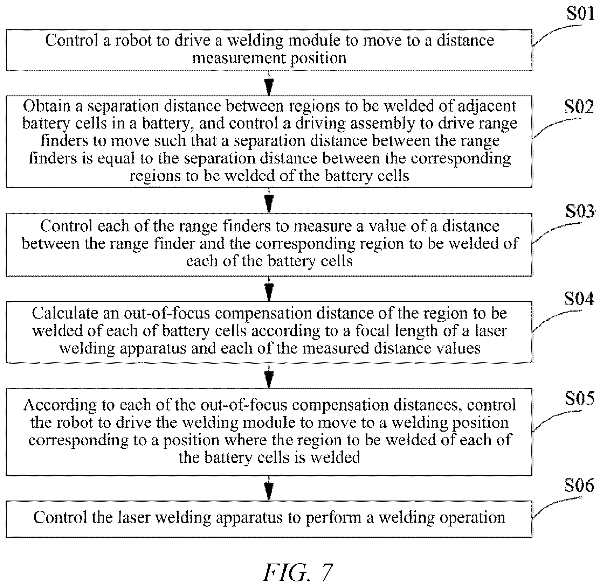

A method for controlling a battery welding system, aspect not covered by the present invention, is now described, said method being applied to a control device. The control device is not limited in terms of specific type, and may be, for example, a Programmable Logic Controller (PLC), an industrial personal computer, etc. Referring to FIG. 7, the control method includes the following steps.

At step S01, a robot is controlled to drive a welding module to move to a distance measurement position.

The distance measurement position is a position where the separation distance between the range finder 122 and the position to be welded can be measured by the range finder 122 after the welding module 10 reaches that position.

At step S02, a separation distance between regions to be welded of adjacent battery cells in a battery is obtained, and a driving assembly is controlled to drive range finders to move such that a separation distance between the range finders is equal to the separation distance between the corresponding regions to be welded of the battery cells.

The separation distance between the regions to be welded 30a of adjacent battery cells 30 in the battery is the design size of the battery. There are different separation distances between the regions to be welded 30a of adjacent battery cells 30 in different types of batteries, separation distance values for different types of batteries are pre-stored in a storage unit of the control device, and according to the type of the battery produced currently, the separation distance between the regions to be welded 30a of adjacent battery cells 30 in the currently produced battery is obtained from the storage unit.

In this way, the region to be welded 30a of each battery cell 30 can be covered by a measurement range of one measurement instrument.

At step S03, each of the range finders is controlled to measure a value of a distance between the range finder and the corresponding region to be welded of each of the battery cells.

At step S04, an out-of-focus compensation distance of the region to be welded of each of the battery cells is calculated according to a focal length of the laser welding apparatus and each of the measured distance values.

It can be understood that the focal length of the lens 111 of the laser welding apparatus is fixed, and distances between the regions to be welded 30a of different types of batteries and the lens 111 of the laser welding apparatus are different due to a change in size of the batteries.

It can be understood that since the lens 111 of the laser welding apparatus and the range finder 122 are not located at the same position, it is required to obtain the out-of-focus compensation distance by additionally combining with the focal length of the laser welding apparatus and each of the measured distance values and according to an orientation deviation between the positions of the lens and the range finder.

Each range finder 122 is a laser range finder, the movement direction of the range finder 122 is perpendicular to the lens optical axis 11b of the laser welding apparatus, and when the direction in which the range finder 122 emits the ranging laser beam is parallel to the lens optical axis 11b of the laser welding apparatus, a distance and an included angle between the lens 111 and the range finder 122 of the laser welding apparatus in a direction of the lens optical axis 11b remain unchanged. Therefore, the rated parameters are pre-stored in the storage unit of the control device in order to obtain the out-of-focus compensation distance by combining with the focal length of the laser welding apparatus and each of the measured distance values.

At step S05, according to each of the out-of-focus compensation distances, the robot is controlled to drive the welding module to move to a welding position corresponding to a position where the region to be welded of each of the battery cells is welded.

The welding position is a position where the laser welding apparatus emits laser light to perform welding.

In this way, after the laser light emitted by the laser welding apparatus is converged by the lens 111, a focus of convergence is located in the region to be welded 30a, so that energy of the laser light is converged as much as possible on the region to be welded 30a, improving the welding effect.

At step S06, the laser welding apparatus is controlled to perform welding.

With the control method as described above, the battery welding system can adaptively adjust the position of the range finder 122 for different types of batteries, so as to obtain an actual distance between the laser welding apparatus and the region to be welded 30a on the battery. This is used as a reference to facilitate the positioning of the focus of the laser welding apparatus near the region to be welded 30a by moving the laser welding apparatus, which is conductive to improving the welding quality.

In some embodiments, the control method further includes, before controlling the laser welding apparatus to perform the welding operation,
controlling the gas blowing assembly 14 to be opened such that a gas curtain is formed between the lens 111 of the laser welding apparatus and the battery.

In this way, the probability of damage to the lens 111 caused by the spattered high-temperature foreign matter coming into contact with the lens 111 during welding by the laser welding apparatus is reduced.

The foregoing descriptions merely illustrate the preferred embodiments of the present invention, but are not intended to limit the present invention, which scope of protection is defined in the appended claims.

### Industrial Applicability

In the battery welding system in the embodiments of the present invention, the driving assembly driving the range finders to move enables the separation distance between the range finders in the first direction to change, so that the separation distance between the range finders in the first direction can correspond to a separation distance between regions to be welded on the battery in the first direction without disassembling the range finders. Accordingly, the efficiency of adjusting the separation distance between the range finders is improved, the time is saved, the workload is reduced, and it is conductive to improving production efficiency.

## Claims

1. A battery welding system for welding terminal posts (31) of different battery cells (30) in a battery by means of busbars (40), the battery welding system comprising:
a welding module (10) comprising:
a welding apparatus (11) configured to weld the busbars (40) and the terminal posts (31);
**characterised in that** the welding module (10) further comprises:
a plurality of range finders (122); and
a driving assembly (121) comprising:
a lead screw (1212);
a driving electric motor (1211), wherein a driving end of the driving electric motor (1211) is drivingly connected to one end of the lead screw (1212);
a guide rail (1213), wherein the guide rail (1213) extends in the same direction as the lead screw (1212); and
a slider (1214) in sliding fit with the guide rail (1213), wherein at least one of the plurality of range finders (122) is arranged on the slider (1214);
wherein the driving assembly (121) is configured to drive the plurality of range finders (122) to move in a first direction such that a separation distance between the plurality of range finders (122) in the first direction changes, the first direction being a direction in which the battery cells (30) connected by the busbars (40) are arranged; and
wherein at least some of the plurality of range finders (122) are drivingly connected to a driving end of the driving assembly (121).

2. The battery welding system according to claim 1, wherein the welding module (10) comprises a housing (13), a mounting cavity (13a) is provided in the housing (13), the welding apparatus (11) is arranged in the mounting cavity (13a), one side of the mounting cavity (13a) is open to form a clearance opening (13b), and the welding apparatus (11) is capable of passing through the clearance opening (13b) to perform welding.

3. The battery welding system according to claim 2, wherein the plurality of range finders (122) are arranged on an outer surface of the housing (13) and located at an edge of the clearance opening (13b).

4. The battery welding system according to any one of claims 1 to 3, wherein the welding apparatus (11) is a laser welding apparatus, the welding module (10) comprises a gas blowing assembly (14), the gas blowing assembly (14) is provided with an air outlet (14a) for blowing out a gas flow, the gas blowing assembly (14) is arranged on an emission side of a lens (111) of the laser welding apparatus, and the air outlet (14a) faces a laser sweeping range (11a) of the laser welding apparatus, such that the gas flow blown out of the air outlet (14a) is located between the lens (111) and regions to be welded (30a) of the battery.

5. The battery welding system according to claim 4, wherein an air outlet direction of the air outlet (14a) is perpendicular to a lens optical axis (11b) of the laser welding apparatus.

6. The battery welding system according to claim 4 or 5, wherein a plurality of gas blowing assemblies (14) are provided, and the plurality of gas blowing assemblies (14) are arranged in an extension direction of the lens optical axis (11b) of the laser welding apparatus.

7. The battery welding system according to any one of claims 4 to 6, wherein each of the plurality of range finders (122) is a laser range finder (122), and a movement direction of the plurality of range finders (122) is perpendicular to the lens optical axis (11b) of the laser welding apparatus.

8. The battery welding system according to claim 7, wherein a direction in which the plurality of range finders (122) emits a ranging laser beam is parallel to the lens optical axis (1lb) of the laser welding apparatus.

9. The battery welding system according to claim 7 or claim 8, wherein light emission regions (1221) of the plurality of range finders (122) are aligned with each other.

10. The battery welding system according to any one of claims 7-9, wherein the welding module (10) comprises a first protective assembly (15), the first protective assembly (15) comprises a first barrier plate (151) and a first driving member (152), and a driving end of the first driving member (152) is drivingly connected to the first barrier plate (151), such that the first barrier plate (151) selectively covers the light emission regions (1221) of the plurality of range finders (122).

11. The battery welding system according to any one of claims 1 to 10, comprising a robot (20), wherein an execution end (21) of the robot (20) is drivingly connected to the welding module (10) so as to drive the welding module (10) to move to welding positions for welding the regions to be welded (30a).

12. The battery welding system according to any one of claims 1 to 11, further comprising:
a conveying module for conveying the battery to be welded to a welding operation position;
a positioning module for fixing the position of each battery cell (30) and the position of each busbar (40) after the battery reaches the welding operation position; and
a pressing plate module for abutting against the busbar (40) after the position of the battery cell (30) and the position of the busbar (40) are fixed, such that the busbar (40) is attached to the terminal posts (31).

## Patentansprüche

1. Batterieschweißsystem zum Verschweißen von Anschlusspfosten (31) von verschiedenen Batteriezellen (30) in einer Batterie mittels Sammelschienen (40), wobei das Batterieschweißsystem Folgendes umfasst:
ein Schweißmodul (10), umfassend:
eine Schweißeinrichtung (11), die konfiguriert ist, um die Sammelschienen (40) und die Anschlusspfosten (31) zu verschweißen;
**dadurch gekennzeichnet, dass** das Schweißmodul (10) ferner Folgendes umfasst:
eine Vielzahl von Entfernungsmessern (122); und
eine Antriebsanordnung (121), umfassend:
eine Leitspindel (1212);
einen elektrischen Antriebsmotor (1211), wobei ein Antriebsende des elektrischen Antriebsmotors (1211) antriebsmäßig mit einem Ende der Leitspindel (1212) verbunden ist;
eine Führungsschiene (1213), wobei sich die Führungsschiene (1213) in derselben Richtung wie die Leitspindel (1212) erstreckt; und
einen Schieber (1214), der gleitend auf der Führungsschiene (1213) sitzt, wobei mindestens einer der Vielzahl von Entfernungsmessern (122) auf dem Schieber (1214) angeordnet ist;
wobei die Antriebsanordnung (121) konfiguriert ist, um die Vielzahl von Entfernungsmessern (122) so anzutreiben, dass sie sich in einer ersten Richtung bewegen, sodass sich ein Trennungsabstand zwischen der Vielzahl von Entfernungsmessern (122) in der ersten Richtung ändert, wobei die erste Richtung eine Richtung ist, in der die Batteriezellen (30), die durch die Sammelschienen (40) verbunden sind, angeordnet sind; und
wobei mindestens einige der Vielzahl von Entfernungsmessern (122) antriebsmäßig mit einem Antriebsende der Antriebsanordnung (121) verbunden sind.

2. Batterieschweißsystem nach Anspruch 1, wobei das Schweißmodul (10) ein Gehäuse (13) umfasst, ein Einbauhohlraum (13a) in dem Gehäuse (13) bereitgestellt ist, die Schweißeinrichtung (11) in dem Einbauhohlraum (13a) angeordnet ist, eine Seite des Einbauhohlraums (13a) offen ist, um eine Durchgangsöffnung (13b) zu bilden, und die Schweißeinrichtung (11) durch die Durchgangsöffnung (13b) hindurchgeführt werden kann, um das Schweißen durchzuführen.

3. Batterieschweißsystem nach Anspruch 2, wobei die Vielzahl von Entfernungsmessern (122) an einer Außenoberfläche des Gehäuses (13) angeordnet sind und sich an einem Rand der Durchgangsöffnung (13b) befinden.

4. Batterieschweißsystem nach einem der Ansprüche 1 bis 3, wobei die Schweißeinrichtung (11) eine Laserschweißeinrichtung ist, das Schweißmodul (10) eine Gasblasanordnung (14) umfasst, die Gasblasanordnung (14) mit einem Luftauslass (14a) zum Ausblasen eines Gasstroms versehen ist, die Gasblasanordnung (14) auf einer Emissionsseite einer Linse (111) der Laserschweißeinrichtung angeordnet ist und der Luftauslass (14a) einem Laserdurchlaufbereich (11a) der Laserschweißeinrichtung zugewandt ist, so dass sich der Gasstrom, der aus dem Luftauslass (14a) ausgeblasen wird, zwischen der Linse (111) und den zu schweißenden Regionen (30a) der Batterie befindet.

5. Batterieschweißsystem nach Anspruch 4, wobei eine Luftauslass-Richtung des Luftauslasses (14a) senkrecht zu einer optischen Linsenachse (11b) der Laserschweißeinrichtung verläuft.

6. Batterieschweißsystem nach Anspruch 4 oder 5, wobei eine Vielzahl von Gasblasanordnungen (14) bereitgestellt sind und die Vielzahl von Gasblasanordnungen (14) in einer Ausdehnungsrichtung der optischen Linsenachse (11b) der Laserschweißeinrichtung angeordnet sind.

7. Batterieschweißsystem nach einem der Ansprüche 4 bis 6, wobei jeder der Vielzahl von Entfernungsmessern (122) ein Laserentfernungsmesser (122) ist und eine Bewegungsrichtung der Vielzahl von Entfernungsmessern (122) senkrecht zur optischen Linsenachse (11b) der Laserschweißeinrichtung verläuft.

8. Batterieschweißsystem nach Anspruch 7, wobei eine Richtung, in der die Vielzahl von Entfernungsmessern (122) einen Entfernungsmesslaserstrahl aussenden, parallel zur optischen Linsenachse (11b) der Laserschweißeinrichtung verläuft.

9. Batterieschweißsystem nach Anspruch 7 oder Anspruch 8, wobei lichtemittierende Regionen (1221) der Vielzahl von Entfernungsmessern (122) zueinander ausgerichtet sind.

10. Batterieschweißsystem nach einem der Ansprüche 7 bis 9, wobei das Schweißmodul (10) eine erste Schutzanordnung (15) umfasst, wobei die erste Schutzanordnung (15) eine erste Sperrplatte (151) und ein erstes Antriebselement (152) umfasst, und ein Antriebsende des ersten Antriebselements (152) antriebsmäßig mit der ersten Sperrplatte (151) verbunden ist, so dass die erste Sperrplatte (151) die lichtemittierenden Regionen (1221) der Vielzahl von Entfernungsmessern (122) selektiv abdeckt.

11. Batterieschweißsystem nach einem der Ansprüche 1 bis 10, umfassend einen Roboter (20), wobei ein Ausführungsende (21) des Roboters (20) antriebsmäßig mit dem Schweißmodul (10) verbunden ist, um das Schweißmodul (10) so anzutreiben, dass es sich zum Schweißen der zu schweißenden Regionen (30a) zu Schweißpositionen bewegt.

12. Batterieschweißsystem nach einem der Ansprüche 1 bis 11, ferner umfassend:
ein Fördermodul zum Fördern der zu schweißenden Batterie zu einer Schweißarbeitsposition;
ein Positionierungsmodul zum Fixieren der Position jeder Batteriezelle (30) und der Position jeder Sammelschiene (40), nachdem die Batterie die Schweißarbeitsposition erreicht hat; und
ein Druckplattenmodul, das nach dem Fixieren der Position der Batteriezelle (30) und der Position der Sammelschiene (40) an die Sammelschiene (40) anstößt, sodass die Sammelschiene (40) an den Anschlusspfosten (31) befestigt wird.

## Revendications

1. Système de soudage de batterie destiné au soudage de montant de borne (31) de différentes cellules de batterie (30) d'une batterie au moyen de barres omnibus (40), le système de soudage de batterie comprenant :
un module de soudage (10) comprenant :
un appareil de soudage (11) conçu pour souder les barres omnibus (40) et les montants de borne (31) ;
**caractérisé en ce que** le module de soudage (10) comprend en outre :
une pluralité de télémètres (122) ; et
un ensemble d'entraînement (121) comprenant :
une vis mère (1212) ;
un moteur électrique d'entraînement (1211), une extrémité d'entraînement du moteur électrique d'entraînement (1211) étant raccordée en entraînement à une extrémité de la vis mère (1212) ;
un rail de guidage (1213), le rail de guidage (1213) s'étendant dans la même direction que la vis mère (1212) ; et
un curseur (1214) en ajustement coulissant avec le rail de guidage (1213), au moins l'un de la pluralité de télémètres (122) étant agencé sur le curseur (1214) ;
l'ensemble d'entraînement (121) étant conçu pour amener la pluralité de télémètres (122) à se déplacer dans une première direction de telle sorte qu'une distance de séparation entre la pluralité de télémètres (122) dans la première direction change, la première direction étant une direction dans laquelle les cellules de batterie (30) raccordées par les barres omnibus (40) sont agencées ; et
au moins certains de la pluralité de télémètres (122) étant raccordés en entraînement à une extrémité d'entraînement de l'ensemble d'entraînement (121).

2. Système de soudage de batterie selon la revendication 1, le module de soudage (10) comprenant un logement (13), une cavité de montage (13a) étant ménagée dans le logement (13), l'appareil de soudage (11) étant agencé dans la cavité de montage (13a), un côté de la cavité de montage (13a) étant ouvert pour former une ouverture de dégagement (13b), et l'appareil de soudage (11) pouvant passer à travers l'ouverture de dégagement (13b) pour effectuer un soudage.

3. Système de soudage de batterie selon la revendication 2, dans lequel la pluralité de télémètres (122) sont agencés sur une surface externe du logement (13) et situés au niveau d'un bord de l'ouverture de dégagement (13b).

4. Système de soudage de batterie selon l'une quelconque des revendications 1 à 3, l'appareil de soudage (11) étant un appareil de soudage laser, le module de soudage (10) comprenant un ensemble de soufflage de gaz (14), l'ensemble de soufflage de gaz (14) étant pourvu d'une sortie d'air (14a) destinée au soufflage d'un flux de gaz, l'ensemble de soufflage de gaz (14) étant agencé sur un côté émission d'une lentille (111) de l'appareil de soudage laser, et la sortie d'air (14a) faisant face à une plage de balayage de laser (11a) de l'appareil de soudage laser, de telle sorte que le flux de gaz soufflé par la sortie d'air (14a) est situé entre la lentille (111) et des régions à souder (30a) de la batterie.

5. Système de soudage de batterie selon la revendication 4, dans lequel une direction de sortie d'air de la sortie d'air (14a) est perpendiculaire à un axe optique de lentille (11b) de l'appareil de soudage laser.

6. Système de soudage de batterie selon la revendication 4 ou 5, dans lequel une pluralité d'ensembles de soufflage de gaz (14) sont fournis, et la pluralité d'ensembles de soufflage de gaz (14) sont agencés dans une direction d'extension de l'axe optique de lentille (11b) de l'appareil de soudage laser.

7. Système de soudage de batterie selon l'une quelconque des revendications 4 à 6, dans lequel chacun de la pluralité de télémètres (122) est un télémètre laser (122), et une direction de déplacement de la pluralité de télémètres (122) est perpendiculaire à l'axe optique de lentille (11b) de l'appareil de soudage laser.

8. Système de soudage de batterie selon la revendication 7, dans lequel une direction dans laquelle la pluralité de télémètres (122) émettent un faisceau laser de télémétrie est parallèle à l'axe optique de lentille (11b) de l'appareil de soudage laser.

9. Système de soudage de batterie selon la revendication 7 ou la revendication 8, dans lequel des régions d'émission de lumière (1221) de la pluralité de télémètres (122) sont alignées les unes avec les autres.

10. Système de soudage de batterie selon l'une quelconque des revendications 7 à 9, dans lequel le module de soudage (10) comprend un premier ensemble de protection (15), le premier ensemble de protection (15) comprend une première plaque barrière (151) et un premier élément d'entraînement (152), et une extrémité d'entraînement du premier élément d'entraînement (152) est raccordée en entraînement à la première plaque barrière (151), de telle sorte que la première plaque barrière (151) recouvre sélectivement les régions d'émission de lumière (1221) de la pluralité de télémètres (122).

11. Système de soudage de batterie selon l'une quelconque des revendications 1 à 10, comprenant un robot (20), dans lequel une extrémité d'exécution (21) du robot (20) est raccordée en entraînement au module de soudage (10) de sorte à amener le module de soudage (10) à se déplacer vers des positions de soudage pour le soudage des régions à souder (30a).

12. Système de soudage de batterie selon l'une quelconque des revendications 1 à 11, comprenant en outre :
un module de transport destiné à transporter la batterie à souder jusqu'à une position d'opération de soudage ;
un module de positionnement destiné à fixer la position de chaque cellule de batterie (30) et la position de chaque barre omnibus (40) après que la batterie a atteint la position d'opération de soudage ; et
un module de plaque de pression destiné à venir en butée contre la barre omnibus (40) après que la position de la cellule de batterie (30) et la position de la barre omnibus (40) ont été fixées, de telle sorte que la barre omnibus (40) soit attachée aux montants de borne (31).
